# FASCICULE DE BREVET EUROPEEN

(11) **EP 1 095 812 B1**
(45) Date de publication et mention de la délivrance du brevet: **15.12.2010**
(21) Numéro de dépôt: 00402768.6
(22) Date de dépôt: 06.10.2000
(51) Int. Cl.: B60M 1/08, B60M 5/00, B60M 1/10

(54) **Système d'alimentation par le sol pour véhicule électrique et véhicule électrique destiné à être alimenté au moyen d'un tel système d'alimentation**
Flurzuführungssystem für ein elektrisches Fahrzeug und elektrisches Fahrzeug, das von diesem Zuführungssystem versorgt wird
Floor supply system for an electrical vehicle and electrical vehicle to be fed by such a supply system

(30) Priorité: 25.10.1999 FR 9913289
(43) Date de publication de la demande: 02.05.2001
(73) Titulaire: ALSTOM Transport SA, 92300 Levallois-Perret (FR)
(72) Inventeur: Cornic, Daniel, 78112 Fourqueux (FR)
(74) Mandataire: Domenego, Bertrand

(56) Documents cités:
- EP-A- 0 962 353
- WO-A-91/01232
- FR-A- 2 696 985
- FR-A- 2 762 810

## Description

La présente invention se rapporte à un système d'alimentation par le sol pour véhicule électrique, en particulier pour véhicule ferroviaire électrique.

Elle se rapporte également à un véhicule électrique alimenté au moyen d'un tel système.

Par système d'alimentation par le sol, on entend un système d'alimentation par lequel l'énergie électrique nécessaire pour alimenter la motrice du véhicule est délivrée par l'intermédiaire d'une piste conductrice segmentée équipant la chaussée sur laquelle circule le véhicule et dont les segments sous tension sont à tout moment couverts par le gabarit du véhicule, par opposition aux systèmes d'alimentation utilisant un réseau de lignes aériennes contre lesquelles vient s'appliquer un pantographe de captage de courant.

Le système d'alimentation utilisant des lignes aériennes présentent un certain nombre d'inconvénients rédhibitoires, notamment esthétiques, qui les rendent inappropriées pour l'alimentation d'un véhicule destiné à circuler dans des secteurs historiques sauvegardés , par exemple des centres urbains classés.

Les systèmes d'alimentation par le sol, dans lesquels les dispositifs d'alimentation des pistes conductrices sont intégrés à la chaussée remédient à cet inconvénient.

Il existe à ce jour différents types de systèmes d'alimentation par le sol.

Un exemple de système connu est décrit dans le document EP-A-0 761 493 . Ce système comporte une piste conductrice constituée par une succession de plaques électriquement isolées les unes des autres qui recouvrent un caniveau dans lequel s'étend un ruban élastiquement déformable contenant un matériau ferromagnétique dont les deux faces sont recouvertes d'un matériau conducteur.

La face supérieure du ruban est reliée à une ligne d'alimentation.

Selon cette technique, le véhicule ferroviaire est équipé d'aimants adaptés pour attirer magnétiquement le ruban de manière que celui-ci vienne en contact par sa face supérieure avec l'une des plaques de la piste conductrice contre laquelle se déplace un frotteur d'alimentation du véhicule.

Ce type de système d'alimentation, bien qu'esthétiquement avantageux présente un temps de réponse non négligeable et nécessite de prévoir un élément mobile, à savoir le ruban élastiquement déformable, ce qui est susceptible d'engendrer un nombre non négligeable de dysfonctionnements.

Les documents FR-A-2 762 810 et WO-A-9101232 décrivent chacun un système d'alimentation par le sol pour véhicule électrique correspondant au préambule de la revendication 1.

Le but de l'invention est de pallier ces inconvénients et de fournir un système d'alimentation par le sol présentant une grande simplicité de fonctionnement, ayant un temps de réponse minimal, et permettant d'obtenir une sécurité et une fiabilité et disponibilité accrues.

Elle a donc pour objet un système d'alimentation par le sol pour véhicule électrique, notamment pour véhicule ferroviaire, comprenant une succession de segments conducteurs isolés électriquement les uns des autres et formant conjointement une piste conductrice d'alimentation contre laquelle vient s'appliquer au moins un frotteur d'alimentation du véhicule, ce ou ces frotteurs venant successivement en contact avec les segments au cours du déplacement du véhicule, et un ensemble de dispositifs d'alimentation à haute tension raccordés chacun à un segment conducteur et dotés chacun de moyens de détection de frotteur et de moyens de commutation adaptés pour provoquer sélectivement l'alimentation d'un segment correspondant en présence d'un frotteur sur ce dernier et la connexion dudit segment à une source de potentiel nul en l'absence de frotteur, caractérisé en ce que les moyens de commutation comportent un couple d'éléments formant interrupteurs statiques pilotés par les moyens de détection pour provoquer respectivement l'alimentation du segment correspondant en présence d'un frotteur et sa connexion à la source de potentiel nul en l'absence de frotteur, et en ce que chaque dispositif d'alimentation comporte en outre des moyens de court-circuitage sollicités à l'état fermé et qui sont interposés entre le segment correspondant et la source de potentiel nul et pilotés à l'ouverture par les moyens de détection.

Ce système d'alimentation par le sol peut en outre comporter une ou plusieurs des caractéristiques suivantes, prises isolément ou selon toutes les combinaisons techniquement possibles :
- les moyens de détection de la présence d'un frotteur sur le segment correspondant comportent des moyens de détection d'un signal codé transmis, par conduction et par courant porteur, par le véhicule audit dispositif par l'intermédiaire du frotteur,
- le signal codé véhiculant des informations codées relatives au véhicule qui l'a émis, les moyens de détection comportent des moyens de traitement desdites informations et des moyens de comparaison de données résultant dudit traitement avec des données correspondant à des informations relatives au véhicule autorisé à circuler sur la piste conductrice,
- les moyens de détection comportent des moyens pour vérifier que l'intégralité du signal codé a été reçu, par traitement d'un code cyclique redondant intégré audit signal,
- il comporte en outre un dispositif de contrôle de la tension de chaque segment raccordé à chacun desdits moyens de détection, lesdits dispositifs de contrôle comprenant des moyens de comparaison entre la tension du segment correspondant et une valeur maximale de seuil, et un ensemble de circuits logiques adaptés pour provoquer la fermeture des moyens de court-circuitage en cas de dépassement de la valeur de seuil et en l'absence de frotteur,
- le dispositif de contrôle constitue un élément indépendant des moyens de traitement,
- chaque dispositif d'alimentation est doté d'un fusible, placé en série sur l'élément formant interrupteur pilotant l'alimentation du segment correspondant,
- les moyens de détection sont raccordés aux dispositifs d'alimentation d'un nombre prédéterminé de segments immédiatement voisins pour positionner les moyens de commutation de ces dispositifs en vue de l'alimentation des segments respectifs lorsque lesdits moyens de détection pilotent les moyens de commutation de manière à provoquer l'alimentation du segment qui leur correspond,
- les moyens de détection comportent un microprocesseur raccordé à un amplificateur et à un filtre passe bande dont la sortie pilote la commutation en puissance et/ou en contrôle des éléments formant interrupteur,
- les éléments formant interrupteurs statiques sont constitués par des transistors bipolaires à grilles isolées (IGBT),
- chaque dispositif d'alimentation comporte des moyens de contrôle de la tension aux bornes des transistors IGBT en vue d'interdire l'alimentation du segment correspondant en présence d'un dysfonctionnement, notamment en présence d'un courant circulant dans les transistors de valeur supérieure à une valeur maximale admissible,
- les dispositifs d'alimentation sont chacun disposés dans un module amovible placé dans un caniveau ménagé dans une chaussée sur laquelle circule le véhicule et recouvert de façon étanche par les segments conducteurs, une ligne d'alimentation à haute tension et une ligne positionnée à un potentiel nul assurant un retour d'alimentation étant disposées longitudinalement dans le caniveau,
- le caniveau est disposé sensiblement en partie médiane de la zone de la chaussée sur laquelle circule le véhicule,
- les moyens d'alimentation des moyens de commutation et des moyens de détection comportent la ligne d'alimentation à haute tension,
- le véhicule comportant un second frotteur assurant un retour du courant d'alimentation, les moyens de détection comportent des moyens de discrimination de la polarité des frotteurs d'alimentation et de retour de courant,
- les sorties des dispositifs d'alimentation constituent un moyen de localisation du véhicule destiné à piloter localement des dispositifs de signalisation et/ou un moyen de détection de dysfonctionnements en vue de la réalisation d'un suivi de diagnostic.

L'invention a également pour objet un véhicule électrique destiné à être alimenté au moyen d'un système d'alimentation par le sol tel que défini ci-dessus, caractérisé en ce qu'il comporte au moins un frotteur d'alimentation de la motrice du véhicule, destiné à être appliqué contre la piste conductrice du système d'alimentation par le sol, et auquel sont raccordés des moyens d'émission d'un signal codé véhiculant des informations relatives au type de véhicule auquel appartient le véhicule électrique.

De préférence, le véhicule étant constitué par un véhicule électrique guidé par rail de guidage, le retour du courant d'alimentation est assuré par des rails sur lesquels circule le véhicule ferroviaire ou par le rail de guidage.

En variante, le véhicule comporte au moins un second frotteur assurant le retour du courant d'alimentation longitudinalement décalé par rapport au patin d'alimentation d'un nombre de segments prédéterminé.

D'autres caractéristiques et avantages ressortiront de la description suivante, donnée uniquement à titre d'exemple, et faite en référence aux dessins annexés sur lesquels :
- la figure 1 représente une vue schématique illustrant un exemple d'implantation d'un système d'alimentation par le sol selon l'invention ;
- la figure 2 représente une vue en coupe transversale d'une chaussée dotée d'un caniveau équipé d'un système d'alimentation par le sol selon l'invention ; et
- la figure 3 est un schéma synoptique du système d'alimentation selon l'invention et d'un véhicule électrique alimenté par un tel système.

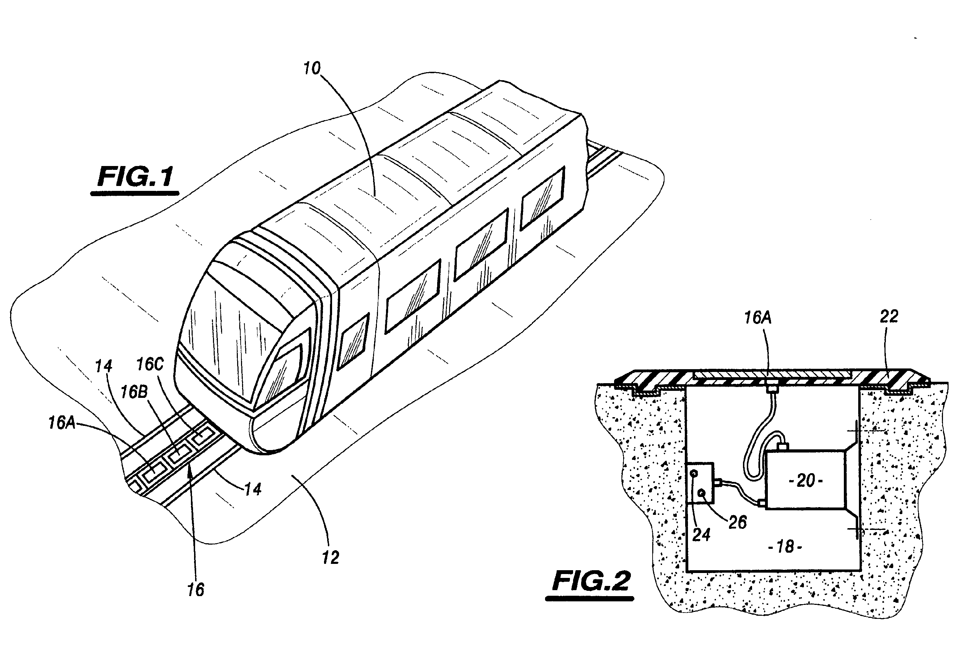

Sur la figure 1, on a représenté un exemple d'implantation d'un système d'alimentation par le sol d'un véhicule électrique 10.

Dans l'exemple de réalisation représenté, le véhicule 10 est constitué par un véhicule de transport en commun, en particulier un tramway.

On conçoit cependant que l'invention s'applique également à tout type de véhicule électrique, par exemple des voitures individuelles, des bus électriques, ou des véhicules ferroviaires.

Dans l'exemple de réalisation représenté, le véhicule 10 circule sur une chaussée 12 dotés de rails de roulement 14 assurant le guidage du véhicule.

Ces rails peuvent être omis si le véhicule 10 est doté de roues directrices avantageusement munies de pneumatiques.

Une piste d'alimentation 16, à haute tension, par exemple à 750V destinée à assurer l'alimentation en énergie électrique de la motrice du véhicule 10 s'étend de façon longitudinale le long de la chaussée 12, de façon médiane par rapport au rail 14, c'est à dire le long de l'axe longitudinal médian du véhicule 10.

Elle est destinée à coopérer avec un ou plusieurs patins ou frotteurs d'alimentation équipant le véhicule 10.

Comme on le voit sur la figure 1, la piste d'alimentation 16 est constituée par une succession de segments conducteurs, tels que 16A, 16B et 16C contre lesquels vient s'appliquer le frotteur d'alimentation du véhicule au cours du déplacement de ce dernier.

Chaque segment a une longueur qui est dépendante de la longueur du véhicule à alimenter. Leur largeur est choisie de manière à pouvoir assurer un contact sur toute la largeur avec le frotteur en tenant compte des mouvements latéraux éventuels de ce dernier, sans contrainte de guidage.

Les segments sont isolés les uns des autres par un matériau isolant approprié.

Comme on le voit sur la figure 2, les segments successifs formant la piste d'alimentation 16 sont disposés de manière à recouvrir un caniveau 18 dans lequel sont disposés un ensemble de dispositif d'alimentation, tel que 20, à haute tension, chaque dispositif d'alimentation 20 étant raccordé électriquement à un segment conducteur.

Afin de conférer une résistance mécanique suffisante pour permettre de résister aux charges routières, chaque segment 16 vient se monter sur un châssis 22 en matériau isolant lui même fixé, de façon étanche, sur le bord du caniveau 18.

De préférence, le dispositif d'alimentation 20 et, le cas échéant, le segment 16 et le châssis 22 qui lui correspondent constituent un ensemble modulaire amovible et interchangeable de manière à favoriser la maintenance et le remplacement des éléments usés ou défectueux.

En particulier, les dispositifs d'alimentation 20 sont chacun disposé dans un module amovible et étanche.

L'ensemble du montage résiste à l'immersion temporaire des voies.

Comme on le voit sur la figure 2, une ligne 24 d'alimentation du dispositif 20 à haute tension ainsi qu'une ligne 26 positionnée à un potentiel nul, assurant un retour du courant d'alimentation, cheminent le long du caniveau 18 et sont raccordées à l'ensemble des dispositifs d'alimentation 20.

Chaque dispositif d'alimentation 20 incorpore des moyens de commutation assurant sélectivement l'alimentation d'un segment conducteur 16A, 16B et 16C dès qu'un contact est établi entre le patin d'alimentation du véhicule et ce dernier et positionnant ce segment à un potentiel nul en l'absence d'un tel contact.

De préférence, les moyens de commutation assurent également l'alimentation des deux segments directement adjacents, cette alimentation étant coupée en l'absence de cette commande adjacente.

Ainsi, lorsque le véhicule 10 chemine le long de la piste 16 conductrice, il est alimenté par le dispositif d'alimentation 20 associé au segment 16A, 16B et 16C avec lequel il entre en contact, les autres segments hormis les segments adjacents restant non alimentés, c'est à dire positionné à un potentiel nul.

On notera que le ou les patins d'alimentation équipant le véhicule sont placés longitudinalement de telle manière qu'un nombre prédéterminé de segments non alimentés séparent le segment alimenté de l'extrémité du véhicule 10.

Cette caractéristique, combinée au positionnement de façon médiane de la piste d'alimentation 16 et au contrôle permanent de la tension de chaque segment, évite tout risque d'électrocution qui serait susceptible d'apparaître au cas où un usager, par exemple un piéton ou un véhicule automobile, entrerait en contact avec un segment alimenté, en évitant qu'un tel segment soit découvert, ou isolé.

Comme cela sera mentionné par la suite, la vitesse de commutation des dispositifs d'alimentation est choisie de manière que les segments redeviennent non alimentés avant la fin du passage du véhicule.

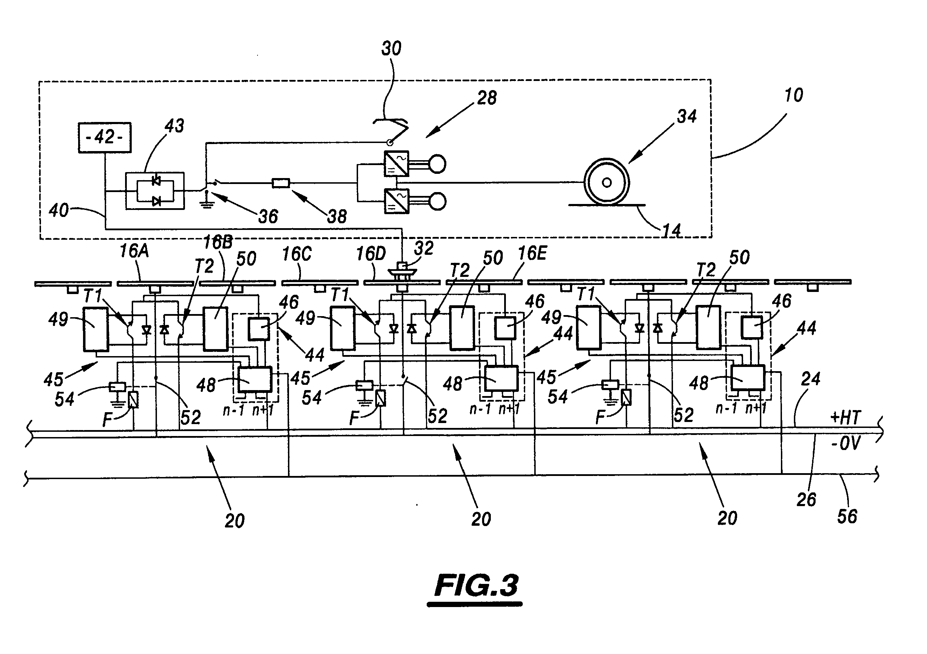

La description détaillée du dispositif d'alimentation 20 des segments va maintenant être faite en référence à la figure 3.

Sur cette figure, seule une partie du véhicule 10 a été représentée. L'exemple de réalisation considéré correspond à un véhicule ayant une alimentation mixte, c'est à dire qu'il est adapté pour être alimenté soit par une ligne aérienne, soit par le sol.

Par ailleurs, dans l'exemple de réalisation représenté, le véhicule est doté de roues guidées par un rail, le retour de courant d'alimentation s'effectuant par l'intermédiaire des rails.

Dans le cas où le véhicule serait doté de roues munies de pneumatiques, sans rail de guidage, le retour de courant s'effectuerait en prévoyant un patin négatif spécifique qui viendrait en contact avec un segment relié au retour de courant de la piste 16. Dans ce cas, les deux patins sont distants d'un nombre prédéterminé de segments.

Comme on le voit sur cette figure 3, la chaîne de traction 28 du véhicule 10 est raccordée, d'une part, soit à un pantographe 30 pour son alimentation au moyen d'un réseau de lignes aériennes, soit à un patin d'alimentation 32 pour son alimentation au moyen du système d'alimentation par le sol et, d'autre part, aux roues 34 du véhicule pour assurer le retour du courant d'alimentation.

Pour assurer la sélection du mode d'alimentation, un commutateur 36 en série avec un circuit 38 de filtrage assure sélectivement la mise en communication de la chaîne de traction 38 soit avec le pantographe 30, soit avec le patin 32.

Cette commutation peut s'effectuer soit manuellement par le conducteur du véhicule, soit automatiquement.

Dans ce dernier cas, les entrées de zone autorisant une alimentation par le sol sont équipés de balises qui communiquent avec des détecteurs appropriés embarqués à bord du véhicule pour piloter l'abaissement des frotteurs 32 et le commutateur 36.

Dans la suite de la description, on considérera que le commutateur 36 est positionné de manière à provoquer l'alimentation de la chaîne 28 au moyen du patin 32.

Comme on le voit sur la figure 3, le câble 40 de puissance raccordant la chaîne de traction 28 et le patin 32 est connecté à un circuit émetteur 42 assurant l'émission d'un signal codé véhiculant, par courant porteur, des informations relatives au type de véhicule auquel le véhicule 10 appartient, ce signal codé étant transmis par conduction vers chaque dispositif d'alimentation 20 au moyen du patin 32 avec lequel il communique.

Par exemple, le signal codé est émis à une fréquence comprise entre 180 et 220 KHz.

De plus, une association Diode/Thyristor 43 permet une récupération d'énergie sur la ligne.

Sur la figure 3, on voit que les segments 16A, 16B et 16C visibles sur la figure 1 ne sont pas en contact avec le patin 32, le segment 16D étant seul en contact du patin 32. Ainsi, seul le segment 16D conduit le courant de traction, les segments 16C et 16E étant prédisposés sous tension par les commandes adjacentes, et les autres segments reliés au potentiel nul.

Par souci de clarté, seuls trois dispositifs d'alimentation 20 ont été représentés. On conçoit toutefois que chaque segment est muni d'un tel dispositif.

On va maintenant décrire ci-dessous la constitution de chacun de ces dispositifs 20 d'alimentation.

Chaque segment conducteur est raccordé, d'une part, à un étage 44 de détection de présence d'un patin et d'analyse des signaux reçus en provenance de l'émetteur 42 et, d'autre part, à un étage 45 de commutation provoquant l'alimentation du segment lorsque la présence d'un patin sur ce segment est détectée, ce segment étant normalement raccordé à la ligne 26 positionnée à un potentiel nul.

L'étage 44 de détection et d'analyse comporte un module 46 de réception des courants porteurs reçus en provenance de l'émetteur 42.

Ce module 46 est réalisé au moyen de techniques classiques appropriées pour réaliser le filtrage, la démodulation et l'extraction des données émises par l'émetteur. Il ne sera donc pas décrit en détail par la suite. On notera cependant qu'il délivre les données extraites à un microcontroleur 48 réalisant la détection proprement dite du patin et l'analyse des données extraites des signaux issus de l'émetteur 42.

En particulier, le microcontroleur 48 réalise cette détection et cette analyse au moyen d'un codage de type à reconnaissance cyclique (CRC), c'est à dire qu'il réalise un traitement des données délivrées par le module de réception 46 en vue du calcul d'un code spécifique, et une comparaison du code ainsi calculé avec un code prédéterminé, stocké en mémoire, et correspondant au type de véhicule autorisé à circuler sur la piste conductrice 16.

On évite ainsi qu'un véhicule incompatible avec le niveau de tension fourni par les dispositifs d'alimentation soit alimenté.

A l'issue de ce traitement, c'est à dire d'une part après détection du signal émis par l'émetteur 42, traduisant la présence d'un patin sur le segment conducteur auquel est associé le dispositif d'alimentation 20 et, d'autre part, analyse des données extraites, pour déterminer si le véhicule 10 est compatible avec le dispositif d'alimentation, celui-ci transmet un signal de commande d'alimentation à l'étage de commutation 45.

Comme on le voit sur la figure 3, cet étage de commutation 45 est principalement constitué par une association d'un couple d'éléments formant interrupteurs statiques, désignés par les références T1 et T2. Il est adapté pour raccorder le segment conducteur 16 à la ligne d'alimentation 24 à haute tension en présence d'un patin 32 et à la ligne 26 de retour de courant en l'absence de patin respectivement.

De préférence, et pour obtenir des temps de réponse compatibles avec la vitesse de déplacement du véhicule 10, ces éléments T1 et T2 sont constitués par des transistors bipolaires à grille isolée (IGBT).

Les grille, émetteur et collecteur de chacun de ces transistors T1 et T2 sont raccordés à un circuit de pilotage de leur commutation, respectivement 49 et 50, raccordés chacun au microcontroleur 48.

Chacun de ces circuits de pilotage 48 et 50 incorpore un amplificateur adapté pour fournir la puissance nécessaire au pilotage des transistors T1 et T2 ainsi qu'un filtre passe bande centré sur la fréquence nominale du signal de commande formulé par le microcontroleur 48, pour éliminer les signaux de perturbations.

Par ailleurs, l'émetteur E1 du transistor T1 est raccordé au segment 16D, le collecteur C1 de ce transistor T1 étant connecté à la ligne 24 d'alimentation, avec interposition d'un fusible F.

Par contre, le connecteur C2 du deuxième transistor T2 est connecté au segment 16D, l'émetteur E2 de ce transistor étant raccordé à la ligne 26 positionnée au potentiel nul.

On voit enfin sur la figure 3, que le dispositif d'alimentation comporte un circuit de court-circuitage, constitué par un élément de commutation 52 associé à un organe 54 de commande de son ouverture, lui-même piloté par le microcontroleur 48.

En cas de défaut, l'élément de commutation 52 est sollicité à l'état fermé, au moyen d'un élément élastique approprié, c'est à dire, en l'absence d'une commande appropriée délivrée par le microcontrôleur à l'organe de commande 54, le segment 16D est positionné à un potentiel nul.

Ainsi, d'une part, ce circuit permet de s'assurer que l'ensemble des segments isolés ou en défaut sont effectivement et en permanence raccordés à la ligne 26 de potentiel nul.

D'autre part, ce circuit est combiné à un circuit de logique de surveillance (non représenté) réalisé à partir de composants analogiques appropriés effectuant de manière indépendante une surveillance en continu de la tension de chaque segment pour la détection de défauts de fonctionnement et une comparaison de cette tension avec une valeur maximale admissible, fixée par exemple à 30 Volts.

Le résultat de cette comparaison associé à la non présence du signal du véhicule, provoque une coupure de l'alimentation de l'organe de commutation 52 en cas de dépassement de la valeur de seuil fixée.

La présence du fusible F évite tout risque de court circuit entre la ligne d'alimentation à haute tension et la ligne de potentiel nul dans le cas où le défaut détecté résulterait de la mise en court circuit du transistor T1.

Dans ce cas, le fusible F est rompu, ce qui provoque définitivement la mise au potentiel nul du segment 16D correspondant.

Les dispositifs de pilotage 48 et 50 incorporent des moyens de contrôle de la tension aux bornes du collecteur et de l'émetteur de chaque transistor de manière à interrompre l'alimentation du segment correspondant en présence d'un dysfonctionnement, notamment en présence d'un courant circulant dans les transistors de valeur supérieure à une valeur maximale admissible.

On notera que ces dysfonctionnements, détectés par le microcontroleur 48, font l'objet de l'émission, par ce dernier, d'un signal d'alarme, émis sur une ligne 56 spécifique, à destination d'un centre de télésurveillance (non représenté), ce signal se présentant de préférence sous une forme codée de manière à fournir l'indication de l'adresse du dispositif d'alimentation défaillant.

On notera par ailleurs que les microcontroleurs 48 de chaque dispositif d'alimentation sont raccordés par une liaison série n-1 et n+1 aux microcontroleurs des dispositifs immédiatement adjacents. Ainsi, dès qu'un dispositif provoque l'alimentation de l'un des segments de la piste d'alimentation 16, le microcontroleur 48 correspondant transmet au microcontroleur des dispositifs immédiatement en aval et en amont, un signal destiné à provoquer le positionnement des transistors T1 et T2 correspondant de manière à assurer l'alimentation des segments adjacents, pour assurer la continuité de conduction entre ces segments adjacents.

Par exemple, la présence d'un frotteur sur un segment provoque la mise en tension consécutive de trois segments adjacents, voire quatre lorsque le patin se situe à cheval sur deux segments, pour assurer une bonne continuité de courant entre les segments.

On notera par ailleurs que l'alimentation des différents éléments entrant dans la constitution de chaque dispositif d'alimentation 20 est réalisée à partir de la ligne 24 d'alimentation à haute tension.

Ainsi, en cas de défaillance de cette alimentation, les circuits de court-circuitage restent à l'état fermé, ce qui impose une mise au potentiel nul des segments correspondant.

Comme mentionné précédemment, le niveau de sécurité des dispositifs d'alimentation est encore accru grâce à l'utilisation des transistors IGBT dont les temps de commutation sont particulièrement faibles, de l'ordre de quelques microsecondes, et par l'utilisation d'un microcontroleur de capacité adaptée pour piloter la commutation des transistors suffisamment rapidement pour ne pas mettre ou laisser sous tension un segment qui serait découvert. C'est à dire, même lorsque le véhicule 10 circule à vitesse maximale, les segments sont positionnés à un potentiel nul avant la fin du passage du convoi.

La mise au potentiel nul des segments s'effectuant dès qu'aucun signal n'est détecté, elle nécessite peu de traitement de signal de la part du microcontroleur. Cette commutation s'effectue donc à la vitesse de commutation des transistors T1 et T2, c'est à dire de l'ordre de la microseconde.

Ainsi, dès qu'un patin n'est plus en contact avec un segment et sauf activation des commandes adjacentes, ce dernier est sensiblement instantanément placé au potentiel nul et, s'il ne l'était pas, le dispositif de court-circuitage 52 interviendrait avant qu'il ne soit découvert par le véhicule.

Au contraire, l'alimentation de ce segment nécessite un traitement préalable du signal codé reçu en provenance du patin 32.

La vitesse du traitement réalisé par le microcontroleur 48, de l'ordre de la dizaine de ms, reste toutefois compatible avec les exigences de commutation nécessaires pour l'alimentation correcte de la motrice du véhicule, même à vitesse maximale.

Par soucis de sécurité on notera par ailleurs que, de préférence, l'émetteur 42 émet le signal sous la forme d'un code cyclique redondant, le microcontroleur 48 incorporant des moyens de logiciels adaptés pour vérifier, à partir du traitement de ce code, que l'intégralité du signal codé a bien été reçu.

On notera que chaque dispositif d'alimentation et en particulier le microcontrôleur comporte des sorties correspondantes d'une part pour les indications de dysfonctionnement permettant au centre de surveillance la réalisation et le suivi de diagnostic via la ligne 56, d'autre part, sur l'indication de localisation de chaque segment alimenté pour une indication de la position du véhicule.

La position du véhicule étant connue avec une précision correspondant à la longueur de chaque segment, cette information sécuritaire peut servir à la télécommande locale de feux de signalisation ou autres.

On conçoit que l'invention qui vient d'être décrite n'est pas limitée aux modes de réalisation envisagés.

En effet, alors que dans le mode de réalisation décrit en référence à la figure 3, le véhicule est doté d'un seul patin utilisé pour véhiculer le signal transmis par l'émetteur 42 et pour transmettre la puissance à la chaîne de traction, il serait possible, en variante, et comme mentionné précédemment, de prévoir deux patins positifs distincts utilisés de façon identique et redondante pour s'affranchir de la présence de zones neutres non alimentées ou pour être en mesure de conserver un fonctionnement correct en présence de pannes, notamment une perte de patin.

Par ailleurs, et comme mentionné précédemment, il serait également possible, dans le cas où le système d'alimentation est destiné à alimenter un véhicule muni de roues à pneumatiques, de prévoir un patin négatif spécifique pour assurer le retour de courant d'alimentation.

Dans ce cas, ce patin est de préférence longitudinalement décalé par rapport au patin d'alimentation d'un nombre de segments prédéterminé, par exemple au nombre de trois, de manière à entrer en contact avec un segment positionné au retour de courant.

Dans, ce dernier mode de réalisation, le microcontroleur incorpore de préférence des moyens de discrimination de la polarité des patins d'alimentation et de retour de courant, par comparaison de phases entre les signaux véhiculés par les patins, afin d'éviter que le dispositif d'alimentation 20 avec lequel le patin de retour de courant communique n'alimente le segment correspondant.

Enfin, dans l'exemple de réalisation décrit, le module 46 de réception des courants porteurs constitue un étage distinct du microcontrôleur 48.

Il serait également possible de l'intégrer au microcontrôleur sous la forme d'un algorithme spécifique stocké en mémoire, étant entendu que la réception du signal codé se faisant toujours, indifféremment, soit par transfert de courant, soit par couplage capacitif.

On notera enfin que dans les différents modes de réalisation envisagés, le système d'alimentation présente un mode de détection de défauts d'un premier niveau, dus, par exemple à une commande défectueuse des moyens de commutation, un défaut de l'un des composants de puissance ou un mode d'alimentation erroné, dans lequel seul les moyens de court-circuitage sont actionnés.

En dernier ressort, la mise en sécurité du système est effectuée, en combinaison, par une détection de la tension des segments, et par l'association des moyens de court-circuitage et du fusible qui, indépendamment du microcontrôleur, viennent positionner au potentiel nul le segment incriminé.

On conçoit cependant que, dans ce cas, l'exploitation du réseau peut être maintenue même lorsque plusieurs segments sont défectueux.

## Revendications

1. Système d'alimentation par le sol pour véhicule électrique, notamment pour véhicule ferroviaire électrique, comprenant une succession de segments conducteurs (16A, 16B, 16C, 16D) isolés électriquement les uns des autres et formant conjointement une piste (16) conductrice d'alimentation contre laquelle vient s'appliquer au moins un frotteur (32) d'alimentation du véhicule , ce ou ces frotteurs venant successivement en contact avec les segments (16A, 16B, 16C, 16D) au cours du déplacement du véhicule, et un ensemble de dispositifs (20) d'alimentation à haute tension raccordés chacun à un segment conducteur et dotés chacun de moyens (46, 48) de détection de frotteur (32) et de moyens de commutation (45) adaptés pour provoquer sélectivement l'alimentation d'un segment correspondant en présence d'un frotteur sur ce dernier et la connexion dudit segment à une source de potentiel nul (26) en l'absence de frotteur (32), **caractérisé en ce que** les moyens de commutation (45) comportent un couple d'éléments (T1, T2) formant interrupteurs statiques pilotés par les moyens de détection (46, 48) pour provoquer respectivement l'alimentation du segment correspondant en présence d'un frotteur (32) et sa connexion à la source de potentiel nul en l'absence de frotteur (32), et **en ce que** chaque dispositif d'alimentation (20) comporte en outre des moyens de court-circuitage (52, 54), qui sont sollicités à l'état fermé et qui sont interposés entre le segment correspondant et la source (26) de potentiel nul et pilotés à l'ouverture par les moyens de détection.

2. Système selon la revendication 1, **caractérisé en ce que** les moyens (46, 48) de détection de frotteur en contact du segment correspondant comportent des moyens de détection d'un signal codé transmis, par conduction et par courant porteur, par le véhicule audit dispositif par l'intermédiaire du frotteur (32).

3. Système selon la revendication 2, **caractérisé en ce que** le signal codé véhiculant des informations codées relatives au véhicule (10) qui l'a émis, les moyens de détection comportent des moyens (48) de traitement desdites informations et des moyens (48) de comparaison de données résultant dudit traitement avec des données correspondant à des informations relatives au véhicule autorisé à circuler sur la piste conductrice.

4. Système selon une des revendications 2 et 3, **caractérisé en ce que** les moyens de détection comportent des moyens (48) pour vérifier
que l'intégralité du signal codé a été reçu, par traitement d'un code cyclique redondant intégré audit signal.

5. Système selon l'une des revendications 3 et 4, **caractérisé en ce qu'**il comporte en outre un dispositif de contrôle de la tension de chaque segment (16A, 16B, 16C, 16D) raccordé à chacun desdits moyens de détection, lesdits dispositifs de contrôle comprenant des moyens de comparaison entre la tension du segment correspondant et une valeur maximale de seuil, et un ensemble de circuits logiques adaptés pour provoquer la fermeture des moyens de court-circuitage en cas de dépassement de la valeur de seuil et en l'absence de frotteur.

6. Système selon la revendication 5, **caractérisé en ce que** le dispositif de contrôle constitue un élément indépendant des moyens de traitement (48).

7. Système selon l'une des revendications 5 et 6, **caractérisé en ce que** chaque dispositif d'alimentation est doté d'un fusible (F) placé en série sur l'élément formant interrupteur (T1) pilotant l'alimentation du segment correspondant.

8. Système selon l'une quelconque des revendications 2 à 7, **caractérisé en ce que** les moyens de détection (46, 48) sont raccordés aux dispositifs d'alimentation d'un nombre prédéterminé de segments immédiatement voisins pour positionner les moyens de commutation (T1, T2) de ces dispositifs en vue de l'alimentation des segments correspondants lorsque lesdits moyens de détection pilotent les moyens de commutation de manière à provoquer l'alimentation du segment qui leur correspond.

9. Système selon l'une quelconque des revendications 1 à 8, **caractérisé en ce que** les moyens de détection comportent un microprocesseur (48) raccordé à un amplificateur et à un filtre passe-bande dont la sortie pilote la commutation en puissance et/ou en contrôle des éléments formant interrupteur.

10. Système selon l'une quelconque des revendications 1 à 9, **caractérisé en ce que** les éléments formant interrupteurs statiques (T1, T2) sont constitués par des transistors bipolaires à grilles isolées (IGBT).

11. Système selon la revendication 10, **caractérisé en ce que** chaque dispositif d'alimentation comporte des moyens (49, 50) de contrôle de la tension aux bornes des transistors IGBT en vue d'interdire l'alimentation du segment correspondant en présence d'un dysfonctionnement, notamment en présence d'un courant circulant dans les transistors de valeur supérieure à une valeur maximale admissible.

12. Système selon l'une quelconque des revendications 1 à 11, **caractérisé en ce que** les dispositifs d'alimentation sont chacun disposés dans un module amovible étanche placé dans un caniveau (18) ménagé dans une chaussée sur laquelle circule le véhicule (10) et recouvert de façon étanche par les segments conducteurs (16A, 16B, 16C, 16D), une ligne (24) d'alimentation à haute tension et une ligne (26) positionnée à un potentiel nul assurant un retour d'alimentation étant disposées longitudinalement dans le caniveau.

13. Système selon la revendication 12, **caractérisé en ce que** le caniveau (18) est disposé sensiblement en partie médiane de la zone de la chaussée sur laquelle circule le véhicule.

14. Système selon l'une des revendications 12 et 13, **caractérisé en ce que** les moyens d'alimentation des moyens de commutation et des moyens de détection comportent la ligne d'alimentation à haute tension.

15. Système selon l'une quelconque des revendications 10 à 14, **caractérisé en ce que** le véhicule comportant un second frotteur assurant un retour du courant d'alimentation, les moyens de détection (44) comportent des moyens de discrimination de la polarité des patins d'alimentation et de retour de courant.

16. Système selon l'une quelconque des revendications 1 à 15, **caractérisé en ce que** les sorties des dispositifs d'alimentation constituent un moyen de localisation du véhicule destiné à piloter localement des dispositifs de signalisation et/ou un moyen de détection de dysfonctionnements en vue de la réalisation d'un suivi de diagnostic.

17. Véhicule électrique (10) destiné à être alimenté au moyen d'un système d'alimentation par le sol selon l'une quelconque des revendications 1 à 14, **caractérisé en ce qu'**il comporte au moins un patin (32) d'alimentation de la motrice du véhicule, destiné à être appliqué contre la piste conductrice du système d'alimentation par le sol, et auquel sont raccordés des moyens (42) d'émission d'un signal codé véhiculant des informations relatives au type de véhicule auquel appartient le véhicule électrique (10).

18. Véhicule selon la revendication 17, **caractérisé en ce qu'**il comporte au moins un second patin assurant le retour du courant d'alimentation longitudinalement décalé par rapport au patin d'alimentation d'un nombre de segments prédéterminé.

19. Véhicule selon la revendication 17, **caractérisé en ce que** ledit véhicule (10) étant constitué par un véhicule ferroviaire électrique, le retour du courant d'alimentation est assuré par des rails (14) de roulement sur lesquels circule le véhicule ferroviaire.

20. Véhicule selon la revendication 17, **caractérisé en ce que** ledit véhicule (10) étant constitué par un véhicule routier électrique guidé, le retour du courant d'alimentation est assuré par un rail de guidage.

21. Véhicule selon l'une quelconque des revendications 17 à 20, **caractérisé en ce qu'**il comporte en outre des moyens (36) de commutation de mode d'alimentation.

22. Véhicule selon l'une quelconque des revendications 17 à 21, **caractérisé en ce qu'**il comporte des moyens (43) de récupération d'énergie électrique.

## Claims

1. Floor supply system for an electric vehicle, in particular for an electric rail vehicle, comprising a succession of conductive segments (16A, 16B, 16C, 16D) electrically insulated from one another and jointly forming a conductive supply track (16), against which at least one supply slide (32) of the vehicle comes into abutment, wherein this or these slides successively come into contact with the segments (16A, 16B, 16C, 16D) during the movement of the vehicle, and an assembly of high-voltage supply devices (20) each connected to a conductive segment and each provided with means (46, 48) for detecting the slide (32) and switching means (45), which are adapted to selectively effect the supply of a corresponding segment when a slide is present thereon and the connection of said segment to a zero potential source (26) when a slide (32) is absent, **characterised in that** the switching means (45) have a pair of elements (T1, T2) forming static circuit breakers controlled by detection means (46, 48) to respectively effect the supply of the corresponding segment when a slide (32) is present and its connection to the zero potential source when a slide (32) is absent, and **in that** each supply device (20) additionally has short-circuiting means (52, 54), which are stressed in the closed state and which are interposed between the corresponding segment and the zero potential source (26) and controlled to open by the detection means.

2. System according to claim 1, **characterised in that** the means (46, 48) for detecting a slide in contact with the corresponding segment have means for detecting a coded signal transmitted, via conduction and carrier current, by the vehicle to said device by means of the slide (32).

3. System according to claim 2, **characterised in that** in the case where the coded signal conveys coded information relating to the vehicle (10) which emitted it, the detection means have means (48) for processing said information and means (48) for comparing data resulting from said processing with data corresponding to the information relating to the vehicle authorised to run on the conductive track.

4. System according to one of claims 2 and 3, **characterised in that** the detection means have means (48) for verifying that the entire coded signal has been received by processing an integrated cyclic redundancy code of said signal.

5. System according to one of claims 3 and 4, **characterised in that** it additionally comprises a device for controlling the voltage of each segment (16A, 16B, 16C, 16D) connected to each of said detection means, wherein said control devices have means for comparing the voltage of the corresponding segment and a maximum threshold value, and an assembly of logic circuits adapted to effect the closure of the short-circuiting means if the threshold value has been exceeded and when a slide is absent.

6. System according to claim 5, **characterised in that** the control device constitutes an element independent of the processing means (48).

7. System according to one of claims 5 and 6, **characterised in that** each supply device is provided with a fuse (F) arranged in series on the element forming the circuit breaker (T1), which controls the power supply of the corresponding segment.

8. System according to any one of claims 2 to 7, **characterised in that** the detection means (46, 48) are connected to the supply devices of a predetermined number of immediately adjacent segments to position the switching means (T1, T2) of these devices in order to supply the corresponding segments when said detection means control the switching means in order to effect supply of the segment corresponding to them.

9. System according to any one of claims 1 to 8, **characterised in that** the detection means comprise a microprocessor (48) connected to an amplifier and to a band-pass filter, the output of which controls the switchover in power and/or control that of the elements forming the circuit breakers.

10. System according to any one of claims 1 to 9, **characterised in that** the elements forming the static circuit breakers (T1, T2) are formed by insulated gate bipolar transistors (IGBT).

11. System according to claim 10, **characterised in that** each supply device comprises means (49, 50) for controlling the voltage at the terminals of the IGBT transistors in order to prevent supply of the corresponding segment in the presence of a dysfunction, in particular in the presence of a current circulating in the transistors with a value higher than a maximum admissible value.

12. System according to any one of claims 1 to 11, **characterised in that** the supply devices are each arranged in a replaceable sealed module placed in a gully (18) arranged in an embankment, on which the vehicle (10) runs, and is tightly covered by the conductive segments (16A, 16B, 16C, 16D), wherein a high-voltage supply line (24) and a line (26) positioned at a zero potential assuring a return of supply are mounted longitudinally in the gully.

13. System according to claim 12, **characterised in that** the gully (18) is arranged substantially in the median section of the zone of the embankment, on which the vehicle runs.

14. System according to one of claims 12 and 13, **characterised in that** the supply means of the switching means and detection means comprise the high-voltage supply line.

15. System according to any one of claims 10 to 14, **characterised in that** in the case where the vehicle has a second slide assuring a supply current return, the detection means (44) comprises means of determining the polarity of the supply blocks and of current return.

16. System according to any one of claims 1 to 15, **characterised in that** the outputs of the supply devices form a means of locating the vehicle intended to locally control the signalling devices and/or a means of distinguishing dysfunctions for the purpose of conducting a diagnostic investigation.

17. Electric vehicle (10) intended to be supplied by means of a floor supply system according to any one of claims 1 to 14, **characterised in that** it comprises at least one supply block (32) of the power unit of the vehicle, intended to be applied against the conductive track of the floor supply system, and to which are connected means (42) for emitting a coded signal conveying information as to the vehicle type the electric vehicle (10) belongs to.

18. Vehicle according to claim 17, **characterised in that** it comprises at least a second block, which assures the supply current return and is shifted longitudinally a predetermined number of segments in relation to the supply block.

19. Vehicle according to claim 17, **characterised in that** in the case where said vehicle (10) constitutes an electric rail vehicle, the supply current return is assured by running rails (14), on which the rail vehicle runs.

20. Vehicle according to claim 17, **characterised in that** in the case where said vehicle (10) constitutes a guided electric road vehicle, the supply current return is assured by a guide rail.

21. Vehicle according to any one of claims 17 to 20, **characterised in that** it additionally comprises means (36) for switching the mode of supply.

22. Vehicle according to any one of claims 17 to 21, **characterised in that** it comprises means (43) for recovering electrical energy.

## Patentansprüche

1. System zur Versorgung eines elektrischen Fahrzeugs, insbesondere eines elektrischen Schienenfahrzeugs über den Boden, aufweisend eine Folge von leitenden Segmenten (16A, 16B, 16C, 16D), die elektrisch voneinander isoliert sind und gemeinsam eine leitende Versorgungsbahn (16) bilden, an die mindestens ein Schleifschuh (32) zur Versorgung des Fahrzeugs angelegt wird, wobei der oder die Schleifschuhe während des Fortbewegens des Fahrzeugs nacheinander mit den Segmenten (16A, 16B, 16C, 16D) in Kontakt kommen, und einen Satz von Vorrichtungen (20) zur Versorgung mit Hochspannung, die jeweils mit einem leitenden Segment gekoppelt sind und jeweils mit Mitteln (46, 48) zum Detektieren eines Schleifschuhs (32) sowie mit Schaltmitteln (45) ausgestattet sind, die zum wahlweisen Bewirken der Versorgung eines jeweiligen Segments in Anwesenheit eines Schleifschuhs auf letzterem und der Verbindung des Segments mit einer Nullpotentialquelle (26) in Abwesenheit eines Schleifschuhs (32) eingerichtet sind, **dadurch gekennzeichnet, dass** die Schaltmittel (45) ein Paar von Elementen (T1, T2) aufweisen, die statische Schalter bilden, die von den Detektionsmitteln (46, 48) gesteuert werden, zum jeweiligen Bewirken der Versorgung des jeweiligen Segments in Anwesenheit eines Schleifschuhs (32) und seiner Verbindung mit der Nullpotentialquelle in Abwesenheit eines Schleifschuhs (32), und dass jede Versorgungsvorrichtung (20) darüber hinaus Kurzschlussmittel (52, 54) aufweist, die in den geschlossenen Zustand gebracht werden und zwischen dem jeweiligen Segment und der Nullpotentialquelle (26) angeordnet sind und durch die Detektionsmittel zum Öffnen gesteuert werden.

2. System gemäß Anspruch 1, **dadurch gekennzeichnet, dass** die Mittel (46, 48) zum Detektieren eines Schleifschuhs in Kontakt mit dem jeweiligen Segment Mittel zum Detektieren eines codierten Signals aufweisen, das durch Leitung und durch Trägerstrom mittels des Schleifschuhs (32) von dem Fahrzeug auf die Vorrichtung übertragen wird.

3. System gemäß Anspruch 2, **dadurch gekennzeichnet, dass** das codierte Signal codierte Informationen in Bezug auf das Fahrzeug (10) überträgt, das dieses ausgegeben hat, und dass die Detektionsmittel aufweisen: Mittel (48) zum Verarbeiten der Informationen und Mittel (48) zum Vergleichen von aus der Verarbeitung resultierenden Daten mit Daten, die Informationen in Bezug auf das Fahrzeug entsprechen, das zum Fahren auf der leitenden Bahn autorisiert ist.

4. System gemäß einem der Ansprüche 2 und 3,
**dadurch gekennzeichnet, dass** die Detektionsmittel Mittel (48) zum Verifizieren, dass die Gesamtheit des codierten Signals empfangen wurde, durch Verarbeitung eines in das Signal integrierten redundanten zyklischen Codes, aufweisen.

5. System gemäß einem der Ansprüche 3 und 4,
**dadurch gekennzeichnet, dass** es ferner eine Vorrichtung zum Steuern der Spannung jedes Segments (16A, 16B, 16C, 16D) aufweist, die an jedes der Detektionsmittel angeschlossen ist, wobei die Steuervorrichtungen Mittel zum Vergleichen der Spannung des jeweiligen Segments mit einem maximalen Schwellenwert und einen Satz von Logikschaltkreisen aufweisen, die zum Bewirken des Schließens der Kurzschlussmittel im Fall eines Überschreitens des Schwellenwertes und im Fall der Abwesenheit eines Schleifschuhs eingerichtet sind.

6. System gemäß Anspruch 5, **dadurch gekennzeichnet, dass** die Steuervorrichtung ein von den Verarbeitungsmitteln (48) unabhängiges Mittel darstellt.

7. System gemäß einem der Ansprüche 5 und 6,
**dadurch gekennzeichnet, dass** jede Versorgungsvorrichtung mit einer Sicherung (F) ausgestattet ist, die auf dem den Schalter (T1) bildenden Element, das die Versorgung des jeweiligen Segments steuert, in Reihe angeordnet ist.

8. System gemäß einem der Ansprüche 2 bis 7,
**dadurch gekennzeichnet, dass** die Detektionsmittel (46, 48) an die Versorgungsmittel einer vorbestimmten Anzahl von direkt benachbarten Segmenten angeschlossen sind, zum Positionieren der Schaltmittel (T1, T2) dieser Vorrichtungen im Hinblick auf die Versorgung der jeweiligen Segmente, wenn die Detektionsmittel die Schaltmittel steuern, so dass die Versorgung des mit ihnen korrespondierenden Segments bewirkt wird.

9. System gemäß einem der Ansprüche 1 bis 8,
**dadurch gekennzeichnet, dass** die Detektionsmittel einen Mikroprozessor (48) aufweisen, der an einen Verstärker und an ein Passbandfilter angeschlossen ist, dessen Ausgang das Einschalten und/oder das Steuerschalten der den Schalter bildenden Elemente steuert.

10. System gemäß einem der Ansprüche 1 bis 9,
**dadurch gekennzeichnet, dass** die statische Schalter bildenden Elemente (T1, T2) durch Bipolartransistoren mit isolierter Gateelektrode [IGBT, engl. Insulated Gate Bipolar Transistor] gebildet sind.

11. System gemäß Anspruch 10, **dadurch gekennzeichnet, dass** jede Versorgungsvorrichtung Mittel (49, 50) zum Steuern der Spannung an den Anschlüssen der IGBT-Transistoren aufweist, im Hinblick auf das Untersagen der Versorgung des jeweiligen Segments in Anwesenheit einer Fehlfunktion, insbesondere in Anwesenheit eines in den Transistoren zirkulierenden Stromes mit einem Wert, der größer als ein maximaler zulässiger Wert ist.

12. System gemäß einem der Ansprüche 1 bis 11,
**dadurch gekennzeichnet, dass** die Versorgungsvorrichtungen jeweils in einem austauschbaren wasserdichten Modul angeordnet sind, das in einem Kabelkanal (18) angeordnet ist, der in einem Fahrdamm untergebracht ist, auf dem sich das Fahrzeug (10) fortbewegt, und der wasserdicht von den leitenden Segmenten (16A, 16B, 16C, 16D) bedeckt wird, wobei eine Leitung (24) zur Versorgung mit Hochspannung und eine auf ein Nullpotential eingestellte Leitung (26), die einen Versorgungsrückfluss sicherstellt, in Längsrichtung in dem Kabelkanal angeordnet sind.

13. System gemäß Anspruch 12, **dadurch gekennzeichnet, dass** der Kabelkanal (18) im Wesentlichen im mittleren Teil des Bereichs des Fahrdamms angeordnet ist, auf dem sich das Fahrzeug fortbewegt.

14. System gemäß einem der Ansprüche 12 und 13,
**dadurch gekennzeichnet, dass** die Versorgungsmittel der Schaltmittel und der Detektionsmittel die Leitung zur Versorgung mit Hochspannung aufweisen.

15. System gemäß einem der Ansprüche 10 bis 14,
**dadurch gekennzeichnet, dass** das Fahrzeug einen zweiten Schleifschuh aufweist, der einen Rückfluss des Versorgungsstroms sicherstellt, wobei die Detektionsmittel (44) Mittel zur Unterscheidung zwischen der Polarität des Versorgungsschleifschuhs und des Stromrückfluss-Schleifschuhs aufweisen.

16. System gemäß einem der Ansprüche 1 bis 15,
**dadurch gekennzeichnet, dass** die Ausgänge der Versorgungsvorrichtungen ein Mittel zum Lokalisieren des Fahrzeugs, das zum lokalen Steuern der Signalisierungsvorrichtungen bestimmt ist und/oder ein Mittel zum Detektieren von Fehlfunktionen im Hinblick auf die Umsetzung einer Diagnosenachverfolgung bilden.

17. Elektrisches Fahrzeug (10), das zum Versorgt-Werden mittels eines Versorgungssystems über den Boden gemäß einem der Ansprüche 1 bis 14 bestimmt ist, **dadurch gekennzeichnet, dass** es mindestens einen Schleifschuh (32) zur Versorgung des Triebwagens des Fahrzeugs aufweist, der zum Anlegen an die leitende Bahn des Systems zur Versorgung über den Boden vorgesehen ist, und an den Mittel (42) zum Senden eines codierten Signals angeschlossen sind, das Informationen in Bezug auf den Fahrzeugtyp überträgt, zu dem das elektrische Fahrzeug (10) gehört.

18. Fahrzeug gemäß Anspruch 17, **dadurch gekennzeichnet, dass** es mindestens einen zweiten Schleifschuh aufweist, der den Rückfluss des Versorgungsstroms sicherstellt, der relativ zu dem Versorgungsschleifschuh um eine vorbestimmte Anzahl von Segmenten in Längsrichtung versetzt ist.

19. Fahrzeug gemäß Anspruch 17, **dadurch gekennzeichnet, dass** das Fahrzeug (10) von einem elektrischen Schienenfahrzeug gebildet wird, wobei der Rückfluss des Versorgungsstroms durch Laufschienen (14) sichergestellt ist, auf denen sich das Schienenfahrzeug fortbewegt.

20. Fahrzeug gemäß Anspruch 17, **dadurch gekennzeichnet, dass** das Fahrzeug (10) von einem elektrischen geführten Straßenfahrzeug gebildet wird, wobei der Rückfluss des Versorgungsstroms durch eine Führungsschiene sichergestellt ist.

21. Fahrzeug gemäß einem der Ansprüche 17 bis 20, **dadurch gekennzeichnet, dass** es ferner Schaltmittel (36) für den Versorgungsmodus aufweist.

22. Fahrzeug gemäß einem der Ansprüche 17 bis 21, **dadurch gekennzeichnet, dass** es Mittel (43) zum Wiedergewinnen von elektrischer Energie aufweist.
